# EUROPÄISCHE PATENTANMELDUNG

(11) **EP 3 241 929 A1**
(43) Veröffentlichungstag der Anmeldung: **08.11.2017**
(21) Anmeldenummer: 16168257.0
(22) Anmeldetag: 04.05.2016
(51) Int. Cl.: C25D 3/56, A21B 3/13, C25D 5/12, C25D 5/14, C25D 5/18, C25D 5/50, C23C 18/16, C22C 19/03

(54) **BESCHICHTUNG VON FUNKTIONSTEILEN AUS METALL**

(71) Anmelder: Haas Food Equipment GmbH, 1210 Wien (AT)
(72) Erfinder: Hansal, Selma, 2753 Markt Piesting (AT); Sandulache, Gabriela, 2560 Berndorf (AT); Hansal, Wolfgang, 2753 Markt Piesing (AT); Kalss, Georg, 1090 Wien (AT); Jiraschek, Stefan, 2202 Königsbrunn (AT)
(74) Vertreter: Puchberger & Partner Patentanwälte

(57) **Zusammenfassung**

Beschichtung von Metallflächen von Funktionsteilen aus Metall, bevorzugt Backplatten, wobei auf die Metallfläche (6) zumindest eine Beschichtung (2) mit einer Legierung aufgetragen ist, dadurch gekennzeichnet, dass die Beschichtung eine Oberflächenschicht (3) umfasst, die aus einer Legierung besteht, die als Hauptbestandteil Nickel (Ni) und Phosphor (P), sowie weiters zumindest ein Metall aus der Gruppe Molybdän (Mo), und Zinn (Sn) enthält.

## Beschreibung

Die Erfindung betrifft die Beschichtung von Metallflächen von Funktionsteilen und insbesondere die Beschichtung von Backplatten oder Metallgegenständen für den Zweck des Backens von Backgut. Besonders bevorzugt betrifft die Erfindung eine Backplatte mit einem Backplattenkörper und einer darauf angeordneten Beschichtung. Weiters betrifft die Erfindung ein Verfahren zur Herstellung der Beschichtung.

Beschichtungen von Funktionsteilen mit harten Beschichtungsmaterialien sind heute in vielen unterschiedlichen Industriebereichen Standard. Bei Backplatten hat sich insbesondere die Beschichtung mit Hartchrom bewährt. Die hohe Härte und Temperaturbeständigkeit, sowie die chemisch sehr beständige Passivierung der Oberfläche, ergeben eine Kombination von Eigenschaften, die Hartchrom zum Werkstoff der Wahl in vielen Bereichen gemacht haben, bei denen es auf diese Oberflächeneigenschaften ankommt. Beispiele dafür sind Walzenbeschichtungen in Druckmaschinen, Beschichtung von Hydraulikkolben und Kolbenstangen, Beschichtung von Formen in der Kunststoff- und Gummiindustrie und die Beschichtung von Funktionsbauteilen in der Pharma- und Lebensmittelindustrie. In ähnlicher Weise hat sich auch die Beschichtung von Backplatten und Backplattenabschnitten für industrielle Backmaschinen als vorteilhaft erwiesen.

Allerdings wird bei der Beschichtung mit Hartchrom ein galvanisches Bad verwendet, welches als aktive Komponente sechswertiges Chrom enthält. Dieses sechswertige Chrom ist ein Umweltgift und stark krebserregend. Somit ist die Verwendung dieser krebserregenden Substanz für die Herstellung von Industrieprodukten sehr eingeschränkt. Aus diesem Grund wird nach Verfahren und Beschichtungen gesucht, die die Verwendung des Chrom VI nicht benötigen.

Die Verwendung von dreiwertigen Chrombädern ist allerdings nur für eine dekorative Chrombeschichtung einsetzbar. Die für funktionelle Teile erforderliche dickere Hartchrombeschichtung ist aus Chrom-III-bädern nicht abscheidbar. Überdies ist anzunehmen, dass in Kürze auch die Verwendung der dreiwertigen Modifikation des Chroms verboten wird.

Einfache Nickellegierungen wie Nickel-Phosphor sind Stand der Technik und können außenstromlos oder galvanisch abgeschieden werden. Im Vergleich zu Hartchrom-Schichten haben diese Schichten aber keine ausreichende Schichthärte. Außerdem kann die Passivität einer Hartchrom-Schicht mit den Nickel-Phosphor-Schichten bei weitem nicht erreicht werden.

Die Literatur beschreibt auch Beschichtungen mit einer Nickel-Legierung mit Gehalt an Kobalt und Phosphor. Der Gehalt von Kobalt, welches sich von der Beschichtung in die Waffelblätter lösen könnte, ist allerdings lebensmittelrechtlich bedenklich und in manchen Ländern auch nicht zugelassen.

Somit ist es eine Aufgabe der vorliegenden Erfindung, für Metalloberflächen und insbesondere für Backplatten oder andere Metallflächen, die mit Teig unter erhöhter Temperatur in Berührung kommen, eine Beschichtung vorzusehen, die die geforderten Eigenschaften aufweist und lebensmittelrechtlich und -technologisch nicht bedenklich sind. Anforderungen an die neue Beschichtung liegen auf den Gebieten der mechanischen Verschleißfestigkeit, Korrosionsbeständigkeit, thermischer Beständigkeit, Lebensmittelzulassung, geringes Verschmutzungsverhalten und positives Backverhalten, Arbeits- und Umweltsicherheit, vertretbare Kosten, Versorgungssicherheit und dergleichen.

Der Erfindung stellt sich weiters die Aufgabe, eine Beschichtung für Funktionsteile aus Metall und insbesondere für Backplatten oder Metallgegenständen für den Zweck des Backens von Backgut zu schaffen, bei der der Einsatz von Chrom, Chromverbindungen, oder anderen lebensmitteltechnisch oder -rechtlich bedenklichen Legierungsbestandteilen oder Elektrolytkomponenten vermieden wird. Weiters ist es Ziel der Erfindung, eine Oberfläche bereitzustellen, die lebensmittelrechtlich unbedenklich und weitgehend porenfrei mit geringer Rauheit ausgestattet ist. Überdies muss die Oberflächenhärte für den Einsatz in Backmaschinen ausreichend groß sein, um eine ausreichend lange Standzeit beim Backen und zwischenliegenden Reinigungsschritten zu gewährleisten. Die Herstellung der Backplatten muss in großtechnischem Maßstab möglich sein, wobei die Kosten niedrig sein sollen.

Die Erfindung umfasst auch Beschichtungen für Funktionsteile aus Metall, die allgemein in der Lebensmitteltechnologie und in anderen Technologien verwendet werden können, wo die erfindungsgemäß erzielbaren Vorteile gewünscht werden.

Die Erfindung ist in erster Linie durch die Merkmale der Ansprüche gekennzeichnet. Weitere vorteilhafte Merkmale ergeben sich aus der nachfolgenden Beschreibung.

Erfindungsgemäß ist vorgesehen, dass die Beschichtung eine Oberflächenschicht umfasst, die aus einer Legierung besteht, die als Hauptbestandteil Nickel (Ni) und Phosphor (P), sowie weiters zumindest ein Metall aus der Gruppe Molybdän (Mo), und Zinn (Sn) enthält.

Nach einem weiteren Merkmal ist vorgesehen, dass in der Oberflächenschicht P im Bereich 1 bis 15 Gew.-% und Mo bis zu 10 Gew.-% und/oder Sn bis 10 Gew.-% und der Rest auf 100 Gew.-% Nickel enthalten ist.

Nach einem weiteren Merkmal ist vorgesehen, dass die Legierung 0,05 bis 10,0 Gew.-% Sn, und/oder 0,01 bis 10,0 Gew.% Mo und 1 bis 15 Gew.-% Phosphor und Nickel auf 100 Gew.-% enthält und dass die Oberflächenschicht eine durch galvanische Abscheidung, bevorzugt Pulsabscheidung, besonders bevorzugt Umkehrpulsabscheidung aus einem galvanischen Bad gewonnene Legierungsschicht ist.

Nach einem weiteren Merkmal ist vorgesehen, dass die Oberflächenschicht eine Rauheit aufweist, deren Ra-Wert kleiner 5 µm, bevorzugt kleiner 3 µm und besonders bevorzugt kleiner 2 µm beträgt.

Nach einem weiteren Merkmal ist vorgesehen, dass die Schichtdicke der Oberflächenschicht zumindest 5 µm bevorzugt zwischen 10 µm und 50 µm beträgt.

Nach einem weiteren Merkmal ist vorgesehen, dass zwischen Oberflächenschicht und Metallfläche eine oder mehrere Unterschichten angeordnet sind.

Nach einem weiteren Merkmal ist vorgesehen, dass die Unterschichten elektrolytisch oder außenstromlos aufgebrachte Nickelschichten sind.

Nach einem weiteren Merkmal ist vorgesehen, dass der Härtegradient der Unterschichten bis zur Oberflächenschicht ansteigend ausgebildet ist.

Nach einem weiteren Merkmal ist vorgesehen, dass die Unterschichten zweilagig sind und eine erste, der Metallfläche nächstliegende, Unterschicht aus Halbglanznickelschicht oder Kupfer und eine zweite Unterschicht aus Glanznickelschicht besteht.

Erfindungsgemäße Backplatte weisen die beschriebene Beschichtung auf, wobei die beschichtete Metallfläche die Backfläche einer Backplatte ist, insbesondere einer Backplatte zum industriellen Herstellen von knusprig-spröden Waffelblättern, Weichwaffeln und Hohlwaffeln sowie Backwaren aller Art. Dabei ist vorgesehen, dass die Backfläche mit einer die Backform bildenden Ausformung und Gravur ausgebildet ist.

Nach einem weiteren Merkmal ist vorgesehen, dass die beschichtete Backplatte bei Temperaturen zwischen 150 °C und 400 °C getempert ist.

Nach einem weiteren Merkmal ist vorgesehen, dass der Backplattenkörper der Backplatte aus Gusseisen, Stahl oder Aluminium besteht.

Die Erfindung wird nachfolgend anhand der Beschichtung einer Backfläche einer Backplatte beschrieben, wobei der Begriff Backplatte in weitestem Sinne zu verstehen ist. Die Backplatten können mit glatten, ebenen Flächen als Backfläche ausgebildet sein. Derartige Backflächen können auch mit einer Gravur oder Oberflächengestaltung versehen, um das gewünschte Backgut aus Teig entsprechend zu formen. Die Backplatte kann aber auch als Funktionsteil aus Metall eine Walzenform oder Form eines Konus aufweisen, um den der zu backende Teig herumgewickelt oder im Falle der Walze in den weichen Teig eingedrückt wird. Im weitesten Sinne kann unter Backplatten jeder Metallgegenstand mit einer Oberfläche verstanden werden, der mit Backgut in Verbindung kommt. Bei all diesen Backplatten oder Funktionsteilen ist gemeinsam, dass sie abriebfest sein müssen, auch wenn häufige Reinigungsschritte vorgesehen sind. Überdies muss sich das Backgut leicht von der Oberfläche rückstandsfrei lösen lassen. Die Backplatten können auch mehrteilig sein, wobei in einem Tragegestell mehrere Backplattenteile angeordnet sind.

Der zu beschichtende Metallkörper wird im Folgenden auch als Backplattenkörper bezeichnet. Üblicherweise besteht der Backplattenkörper aus einer massiven Platte aus Stahl oder Gusseisen, eventuell auch aus Aluminium oder Aluminiumlegierungen, und ist so massiv gebildet, um beim Backvorgang die notwendige Hitze speichern und abgeben zu können. Dabei kann die Backplatte zur Gänze mit einer Backfläche auf einer der Flachseiten ausgestattet sein, wie dies bei großen Waffelbackplatten zur Herstellung knusprig-spröder Waffelplatten erforderlich ist. Es kann der Backplattenkörper aber auch kleinere abgegrenzte Backflächen aufweisen, wenn zum Beispiel auf einer Backplatte eine Mehrzahl voneinander abgetrennter Stücke des Backguts hergestellt werden sollen, wie dies bei Weichwaffeln der Fall sein kann.
Fig. 1 zeigt den schematischen Querschnitt durch ein Funktionsteil mit Beschichtung.
Fig. 2 bis Fig. 5 zeigen rasterelektronenmikroskopische Aufnahmen von Querschnitten oder Oberflächen der Beschichtungen gemäß den Beispielen.

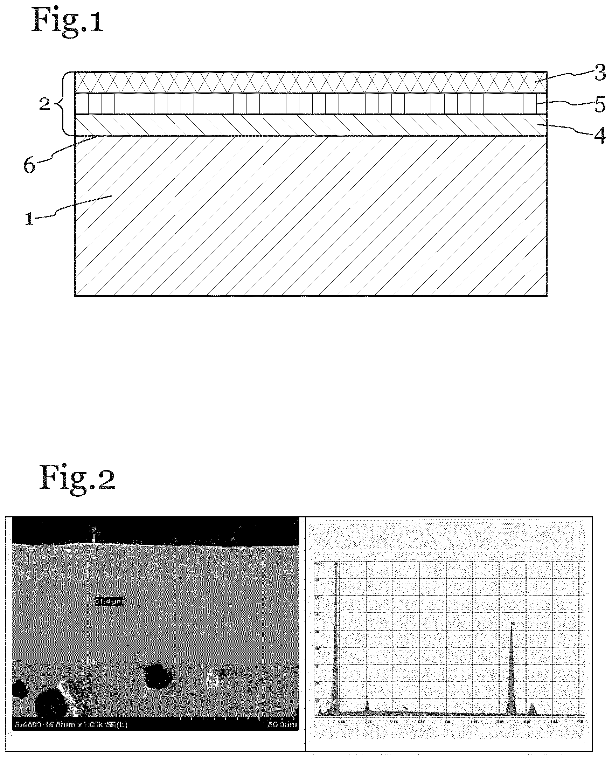

Anhand der einen Fig. 1 wird nun beispielsweise die Erfindung weiter erläutert, ohne die Erfindung damit einschränken zu wollen. Die Schichtdicken sind nicht maßstäblich gezeichnet.

Wie in der Fig. 1 dargestellt ist, liegt auf dem Metallkörper (Backplattenkörper) 1 die erfindungsgemäße Beschichtung 2. Die Beschichtung 2 umfasst entweder zur Gänze oder an ihrer Oberfläche die erfindungsgemäß galvanisch aufgebrachte Legierung, die im Folgenden auch Oberflächenschicht 3 genannt wird. Unter der Oberflächenschicht 3 können noch Unterschichten aus verschiedenen Stoffen aufgebracht werden, wie dies in der Fig. dargestellt ist. Bevorzugt wird eine erste Unterschicht 4 aus z. B. Halbglanznickel auf den Backplattenkörper 1 abgeschieden und darauf eine Glanznickelschicht 5 vorgesehen. Auf dieser Glanznickelschicht 5 kommt dann die Oberflächenschicht 3 zur Abscheidung, die die Oberflächeneigenschaften aufweist.

Die Anordnung von ein oder mehreren Unterschichten bietet den Vorteil, dass der Härtegradient vom Material des Backplattenkörpers 1 zur Oberflächenschicht 3 ansteigend verläuft. Dies führt zu einer stark verringerten Ablöseneigung der Oberflächenschicht 3.

Die Unterschichten können auch entfallen, wobei die erfindungsgemäße Oberflächenschicht direkt auf der Metallfläche der Funktionsteilen abgeschieden wird. Es liegt aber auch im Rahmen der Erfindung, nur eine Nickelunterschicht aufzutragen. Die Nickelunterschichten können sowohl außenstromlos, als auch elektrolytisch, gepulst oder nicht gepulst, abgeschieden werden. Bei außenstromloser Abscheidung kann in der Nickelunterschicht auch ein Phosphorgehalt vorgesehen werden. In einer Ausführungsvariante kann als erste Unterschicht 4 eine Kupferschicht aufgetragen werden, bevorzugt bis zu 10 µm Schichtdicke, worauf dann eine Nickelunterschicht als Träger für die Oberflächenschicht folgt.

Die Oberflächenschicht mit der Legierungsbeschichtung weist bevorzugt eine Schichtdicke von wenigstens 5 µm, bevorzugt zwischen 10 µm und 50 µm auf. Eine höhere Schichtdicke kann in manchen Fällen vorgesehen werden, bringt aber die Schwierigkeit der Maßtoleranz der fertigen Backplatte mit sich. Eine Schichtdicke unter 5 µm ist verschleißanfällig und für Funktionsteile aus Metall nur bedingt verwendbar. Beispielsweise kann auch eine Schichtdicke unter 5 µm für schwierig zu beschichtende Oberflächen, wie Hohlwaffelgeometrien, vorteilhaft sein, wenn die mechanische Belastung gering gehalten wird. Dabei ist zu beachten, dass beim Beschichten einer gravierten Oberfläche die Abscheidung an den verschiedenen Oberflächenmustern variieren kann. So werden Gravurspitzen stärker und die Nutengründe weniger stark beschichtet. Wichtig ist, dass das Verhältnis der Schichtdicken nicht zu stark variiert.

Die Oberflächenschicht soll einen arithmetischen Mittelrauwert Ra kleiner 5 µm aufweisen, bevorzugt kleiner 3 µm und weiters bevorzugt kleiner 2 µm. Der Ra-Wert wird nach DIN EN 150 4288: 1998-04 gemessen. Je geringer die Rauheit, umso besser die Ablöseeigenschaft für das Backgut und umso geringer die Verschmutzungsgefahr.

Die erfindungsgemäß verwendete und sich als vorteilhaft erweisende Oberflächenbeschichtung ist eine Nickel-Phosphor-Legierung, die 1 bis 15 Gew.-% Phosphor und wahlweise 0,01 bis 10 Gew.-% Molybdän oder 0,05 bis 10 Gew.-% Zinn oder sowohl Zinn und Molybdän in den angegebenen Grenzen enthält. Der Rest auf 100 Gew.-% ist Nickel.

Zwischen Oberflächenschicht und Backplattenkörper werden bevorzugt zwei Nickelschichten angeordnet, nämlich eine gepulste erste Nickelschicht mit einer Nickelmattschicht und darauf eine gepulste Glanznickelschicht. Die ansteigende Härte der Schichten bietet den Vorteil, dass die Bindung der Oberflächenschicht erhöht ist und es somit sichergestellt ist, dass sich die Oberflächenschicht nicht von der Backplatte lösen kann.

Die auf dem Backplattenkörper vorgesehene Oberflächengestaltungen und insbesondere Gravur kann entsprechend dem Stand der Technik ausgebildet sein und bedarf demgegenüber keiner Änderung.

Nach dem Beschichten der Backplatte ist es vorteilhaft, eine Temperung bei Temperaturen zwischen 150 °C und 400 °C vorzusehen. Für Backplatten, die im Betrieb ständig bei einem höheren Temperaturbereich von etwa 180 °C bis 220 °C laufen, kann die Temperung auch durch den laufenden Betrieb vorgenommen werden, sodass ein getrennter Temperungsschritt nicht notwendig ist.

Der Elektrolyt zur Abscheidung der Oberflächenbeschichtung umfasst bevorzugt eine Auswahl zumindest aus folgenden Salzen und Säuren:
a) Nickelsulfat Hexahydrat im Bereich von 250 - 700 g/l
b) Nickelchlorid Hexahydrat im Bereich von 5 - 50 g/l
c) Zinn-(IV)-chlorid Hydrat im Bereich von 1 - 40 g/l
d) Zinn-(II)-sulfat im Bereich von 1 - 30 g/l
e) Zinn-(II)-chlorid Dihydrat im Bereich von 1 - 40 g/l
f) Natriummolybdat-Dihydrat im Bereich von 1 - 30 g/l
g) Molybdatophosphorsäure im Bereich von 1 - 30 g/l
h) Natriumcitrat im Bereich von 1 - 90 g/l
i) Borsäure im Bereich von 25 - 45 g/l
j) Phosphorige Säure im Bereich von 1 - 25 g/l
k) Phosphorsäure im Bereich von 1 - 5 g/l
l) Natrium-Hypophosphit im Bereich von 5 - 40 g/l
m)Natrium-Gluconat im Bereich von 40 - 90 g/l
n) Kalium-Natrium-Tartrat im Bereich von 10 - 50 g/l

Weitere Merkmale des Verfahrens sind den Ansprüchen zu entnehmen.

Erfindungsgemäß ist vorgesehen, dass die Metallfläche zumindest abschnittsweise mit einer Oberflächenschicht aus NiMoP- oder NiSnP- oder NiSnMoP-Legierung durch galvanische Abscheidung, bevorzugt im Pulsverfahren und besonders bevorzugt im Umkehrpulsverfahren aus einem galvanischen Bad beschichtet wird. Nach einem weiteren Merkmal ist vorgesehen, dass die Pulsabscheidung der Beschichtung aus einem Elektrolytbad mit folgenden Parameterbereichen durchgeführt wird:
eine unipolare Pulssequenz mit
Pulsstromdichte 0,5-15 A/dm²
Kathodische Pulszeit 5 - 100 ms
Off-Zeit 0,5 - 25 ms

Nach einem weiteren Merkmal ist vorgesehen, dass zur Herstellung der Schicht eine unipolare Pulssequenz mit Basisstrom und Pulspause wie folgt verwendet werden: Pulsstromdichte von 0,5 bis 15 A/dm², Basisstromdichte von 0,1 bis 8 A/dm², kathodische Pulszeit von 5 bis 100 ms, Pulspause von 0,5 bis 30 ms, mit einer Wiederholungsrate der kathodischen Sequenz von 1 bis 50 vor der Pulspause.

Nach einem weiteren Merkmal ist vorgesehen, dass zur Herstellung der Schicht ein bipolarer Puls mit Pulspause wie folgt verwendet werden: kathodische Pulsstromdichte von 0,5 bis 12 A/dm² mit einer Pulszeit von 5 bis 100 ms, anodische Pulsstromdichte von 0,5 bis 20 A/dm² mit einer Pulszeit von 5 bis 100 ms, Pulspause von 0,5 bis 30 ms, mit einer Wiederholungsrate der kathodischen Sequenz von 1 bis 50 vor dem Pulspause.

Nach einem weiteren Merkmal ist vorgesehen, dass zur Herstellung der Schicht ein bipolarer Puls mit Basisstrom wie folgt verwendet wird: kathodische Pulsstromdichte von 0,5 bis 20 A/dm² mit einer Pulszeit von 5 bis 100 ms, kathodische Basisstromdichte von 0,5 bis 12 A/dm² mit einer Pulszeit von 5 bis 100 ms, anodische Pulsstromdichte von 0,5 bis 20 A/dm²mit einer Pulszeit von 5 bis 100 ms, mit einer Wiederholungsrate der kathodischen Sequenz von 1 bis 50 vor dem anodischen Pulsstrom.

Nach einem weiteren Merkmal ist vorgesehen, dass das Elektrolytbad folgende Bestandteile enthält:
- Nickelsulfat Hexahydrat im Bereich von 250 - 700 g/l
- Nickelchlorid Hexahydrat im Bereich von 5 - 50 g/l
- Zinn-(IV)-chlorid Hydrat im Bereich von 1 - 40 g/l
- Borsäure im Bereich von 25 - 45 g/l
- Phosphorige Säure im Bereich von 1 - 25 g/l
- Phosphorsäure im Bereich von 1 - 5 g/l

Nach einem weiteren Merkmal ist vorgesehen, dass das Elektrolytbad folgende Bestandteile enthält:
- Nickelsulfat Hexahydrat im Bereich von 250 - 700 g/l
- Nickelchlorid Hexahydrat im Bereich von 5 - 50 g/l
- Molybdatophosphorsäure im Bereich von 1 - 30 g/l
- Natriumcitrat im Bereich von 1 - 90 g/l
- Borsäure im Bereich von 25 - 45 g/l
- Phosphorige Säure im Bereich von 1 - 25 g/l
- Phosphorsäure im Bereich von 1 - 5 g/l

Nach einem weiteren Merkmal ist vorgesehen, dass das Elektrolytbad folgende Bestandteile enthält:
- Nickelsulfat Hexahydrat im Bereich von 250 - 700 g/l
- Nickelchlorid Hexahydrat im Bereich von 5 - 50 g/l
- Natriummolybdat-Dihydrat im Bereich von 1 - 30 g/l
- Natriumcitrat im Bereich von 1 - 90 g/l
- Borsäure im Bereich von 25 - 45 g/l
- Natrium-Hypophosphit im Bereich von 5 - 40 g/l
wobei zusätzlich folgende Bestandteile enthalten sein können:
- Molybdatophosphorsäure im Bereich von 1 - 30 g/l
- Natriumcitrat im Bereich von 1 - 90 g/l

Nach einem weiteren Merkmal ist vorgesehen, dass das Elektrolytbad folgende Bestandteile enthält:
- Nickelsulfat Hexahydrat im Bereich von 250 - 700 g/l
- Nickelchlorid Hexahydrat im Bereich von 5 - 50 g/l
- Zinn-(II)-sulfat im Bereich von 1 - 30 g/l
- Zinn-(II)-chlorid Dihydrat im Bereich von 1 - 40 g/l
- Natriummolybdat-Dihydrat im Bereich von 1 - 30 g/l
- Borsäure im Bereich von 25 - 45 g/l
- Phosphorige Säure im Bereich von 1 - 25 g/l
- Natrium-Gluconat im Bereich von 40 - 90 g/l
- Kalium-Natrium-Tartrat im Bereich von 10 - 50 g/l

Nach einem weiteren Merkmal ist vorgesehen, dass das Elektrolytbad folgende Bestandteile enthält:
- Nickelsulfat Hexahydrat im Bereich von 250 - 700 g/l
- Nickelchlorid Hexahydrat im Bereich von 5 - 50 g/l
- Zinn-(II)-sulfat im Bereich von 1 - 30 g/l
- Zinn-(II)-chlorid Dihydrat im Bereich von 1 - 40 g/l
- Natriummolybdat-Dihydrat im Bereich von 1 - 30 g/l
- Borsäure im Bereich von 25 - 45 g/l
- Phosphorige Säure im Bereich von 1 - 25 g/l
- Natrium-Gluconat im Bereich von 40 - 90 g/l
- Kalium-Natrium-Tartrat im Bereich von 10 - 50 g/l

Nach einem weiteren Merkmal ist vorgesehen, dass der pH-Wert 1,0 bis 5,0 und die Badetemperatur 25 °C bis 75 °C betragen.

Die Elektrolyte weisen einen pH-Wert von 1,0 bis 5,5 und eine Temperatur von 25 bis 75 °C auf.

Zur Herstellung der Legierungsschicht in einem dieser Elektrolyten kann Gleichstrom verwendet werden, bevorzugt mit einer Stromdichte von 0,5 bis 15 A/dm².

Zur Herstellung der Schicht kann bevorzugt eine unipolare Pulssequenz wie folgt verwendet werden: Pulsstromdichte von 0,5 bis 15 A/ dm², kathodische Pulszeit von 5 bis 100 ms, off-Zeit von 0 bis 25 ms.

Weiters kann zur Herstellung der Schicht eine unipolare Pulssequenz mit Basisstrom und Pulspause wie folgt verwendet werden: Pulsstromdichte von 0,5 bis 15 A/dm², Basisstromdichte von 0,1 bis 8 A/dm², kathodische Pulszeit von 5 bis 100 ms, Pulspause von 0 bis 30 ms, mit einer Wiederholungsrate der kathodischen Sequenz von 1 bis 50 vor der Pulspause verwendet werden.

Weiters kann zur Herstellung der Schicht ein bipolarer Puls mit Pulspause wie folgt verwendet werden: kathodische Pulsstromdichte von 0,5 bis 20 A/dm² mit einer Pulszeit von 5 bis 100 ms, anodische Pulsstromdichte von 0,5 bis 20 A/dm² mit einer Pulszeit von 5 bis 100 ms, Pulspause von 0 bis 30 ms, mit einer Wiederholungsrate der kathodischen Sequenz von 1 bis 50 vor der Pulspause.

Weiters kann zur Herstellung der Schicht ein bipolarer Puls mit Basisstrom wie folgt verwendet werden: kathodische Pulsstromdichte von 0,5 bis 20 A/dm² mit einer Pulszeit von 5 bis 100 ms, kathodische Basisstromdichte von 0,1 bis 8 A/dm² mit einer Pulszeit von 5 bis 100 ms, anodische Pulsstromdichte von 0,5 bis 20 A/dm²mit einer Pulszeit von 5 bis 100 ms, mit einer Wiederholungsrate der kathodischen Sequenz von 1 bis 50 vor dem anodischen Pulsstrom.

In den folgenden Beispielen wird die Erfindung näher erläutert, ohne die Erfindung auf die Beispiele einzuschränken.

### Beispiel 1: Schicht mit Nickel, Zinn und Phosphor

Folgende Elektrolytzusammensetzung wurde vorgelegt:
- 40 g/l Borsäure
- 510 g/l Nickelsulfat Hexahydrat
- 20 g/l Nickelchlorid Hexahydrat
- 21 g/l Phosphorige Säure
- 12 g/l Zinn-(IV)-chlorid Hydrat

Die Chemikalien werden der Reihe nach im warmen Wasser aufgelöst. Nach Zugabe und Auflösung aller Komponenten wird der pH-Wert eingestellt. Die Einstellung des pH-Werts erfolgt mit 1 %iger Natronlauge bzw. 50 %iger Schwefelsäure.

Der pH-Wert soll zwischen 1,1 - 1,8 liegen, das Optimum ist bei 1,2.

Der Elektrolyt arbeitet bei einer Temperatur von 55 - 75°C.

Die Abscheidung erfolgt bei starker Rührung (500 rpm).

Als Substrat wurde ein vernickeltes Stahlsubstrat verwendet.

Zur Herstellung der Schicht wurde ein unipolarer Rechteckpuls verwendet, wobei die mittlere Stromdichte 4 A/dm² betrug. Die kathodischen Stromdichten lagen bei 3,25 A/dm² für 15 ms und 6,5 A/dm² für 5 ms.

Die Beschichtungsdauer betrug 60 Minuten.

Die so hergestellten Schichten hatten folgende Zusammensetzung:
Nickel 94,5 Gew.-%, Zinn 0,5 Gew.-%, Phosphor 5 Gew.-%, die Legierungselemente ergeben zusammen 100 %.

Die Schichten sind gut haftend, rissfrei und glänzend, Schichtdicken betrugen ungefähr bei 10 µm. Eine Temperung bei 200 °C für 30 Minuten wurde vorgenommen.

Fig. 2 zeigt den Querschliff der Schicht in rasterelektronenmikroskopischer Aufnahme und das EDX-Spektrum. Das Substrat war Gusseisen mit Kugelgraphit.

Die Beschichtung hatte eine Dicke von 51,4 µm.

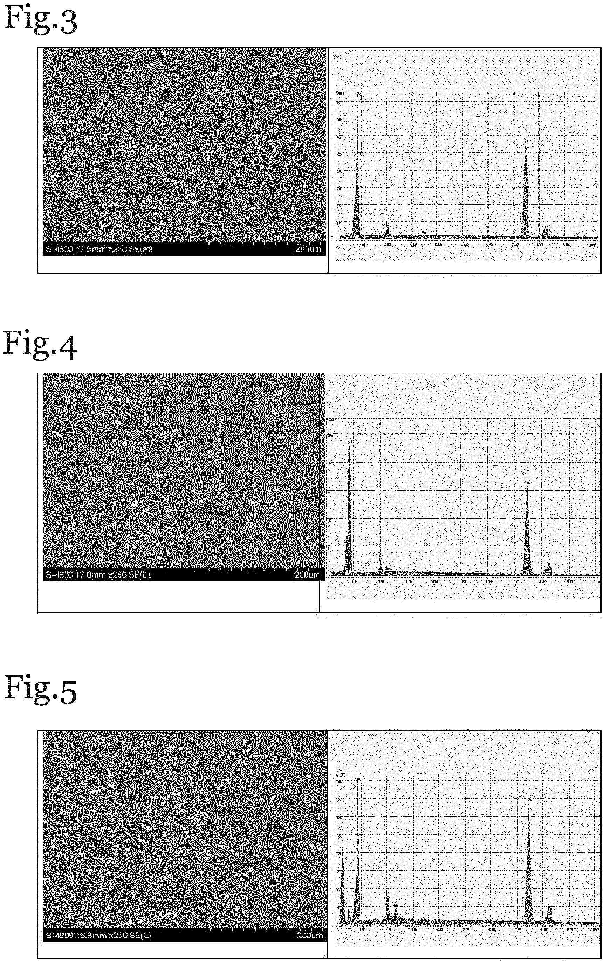

Fig. 3 zeigt die REM-Aufnahme der Oberfläche.

### Beispiel 2: Schicht mit Nickel, Molybdän und Phosphor

Folgende Elektrolytzusammensetzung wurde vorgelegt:
- 510 g/l Nickelsulfat Hexahydrat
- 20 g/l Nickelchlorid Hexahydrat
- 40 g/l Borsäure
- 21 g/l Phosphorige Säure
- 50 g/l Natriumcitrat
- 13 g/l Molybdatophosphorsäure

Die Chemikalien werden der Reihe nach im warmen Wasser aufgelöst. Nach Zugabe und Auflösung aller Komponenten wird der pH-Wert eingestellt. Die Einstellung des pH-Werts erfolgt mit 1 %iger Natronlauge bzw. 50 %iger Schwefelsäure.

Der pH-Wert soll zwischen 1,2 - 3,0 liegen, das Optimum ist bei 2,3.

Der Elektrolyt arbeitet bei einer Temperatur von 45 - 55 °C.

Die Abscheidung erfolgt bei mäßig starker Rührung (300 - 500 rpm).

Als Substrat wurde ein 1 mm starkes Blech aus Messing mit den Maßen 30 mm x 30 mm verwendet.

Zur Herstellung der Schicht wurde ein unipolarer Rechteckpuls verwendet, wobei die mittlere Stromdichte 3,0 A/dm² betrug. Die kathodischen Stromdichten lagen bei 2,5 und 5,0 A/dm² für 10 ms, die anschließende Pulspause betrug 10 ms.

Die Beschichtungsdauer betrug eine Stunde.

Die so hergestellten Schichten hatten folgende Zusammensetzung:
Nickel 96,2 Gew.-%, Molybdän 0,8 Gew.-% und Phosphor 3 Gew.-%, die Legierungselemente ergeben zusammen 100 %.

Die Schichten sind gut haftend, rissfrei und glänzend, Schichtdicken betrugen ungefähr bei 10 µm. Eine Temperung erfolgte bei 200 °C für 30 Minuten.

Fig. 4 zeigt die REM-Aufnahme der Oberfläche der Schicht sowie das EDX-Spektrum.

### Beispiel 3: Schicht mit Nickel, Zinn, Molybdän und Phosphor

Folgende Elektrolytzusammensetzung wurde vorgelegt:
- 510 g/l Nickelsulfat Hexahydrat
- 20 g/l Nickelchlorid Hexahydrat
- 40 g/l Borsäure
- 21 g/l Phosphorige Säure
- 50 g/l Natriumcitrat
- 13 g/l Molybdatophosphorsäure
- 12 g/l Zinn-(IV)-chlorid Hydrat

Die Chemikalien werden der Reihe nach im warmen Wasser aufgelöst. Nach Zugabe und Auflösung aller Komponenten wird der pH-Wert eingestellt. Die Einstellung des pH-Werts erfolgt mit 1 %iger Natronlauge bzw. 50%iger Schwefelsäure.

Der pH-Wert soll zwischen 1,2 - 3,0 liegen, das Optimum ist bei 2,3.

Der Elektrolyt arbeitet bei einer Temperatur von 55 - 75°C.

Die Abscheidung erfolgt bei mäßig bis starker Rührung (300 - 500 rpm).

Als Substrat wurde ein 1 mm starkes Blech aus Messing mit den Maßen 30 mm x 30 mm verwendet.

Zur Herstellung der Schicht wurde ein bipolarer Rechteckpuls verwendet, wobei die mittlere Stromdichte 2,3 A/dm² betrug. Die kathodischen Stromdichten lagen bei 2,0 und 6,0 A/dm² für 20 und 10 ms, die anodische Stromdichte lag bei 5 A/dm² für 5 ms, die anschließende Pulspause betrug 10 ms.

Die Beschichtungsdauer betrug eine Stunde.

Die so hergestellten Schichten hatten folgende Zusammensetzung:
Nickel 91,5 Gew.-%, Molybdän 2 Gew.-%, Zinn 0,5 Gew.-% und Phosphor 6 Gew.-%, die Legierungselemente ergeben zusammen 100 %.

Die Schichten sind gut haftend, rissfrei und glänzend. Die Schichtdicke betrug etwa 10 µm.

### Beispiel 4: Schicht mit Nickel, Molybdän, Phosphor

Folgende Elektrolytzusammensetzung wurde vorgelegt:
- 340g/l Nickelsulfat Hexahydrat
- 20g/l Nickelchlorid Hexahydrat
- 13,7g/l Natrium-Hypophosphit
- 50g/l Natriumcitrat
- 2,5g/l Natrium-Molybdat

Die Chemikalien werden der Reihe nach im warmen Wasser aufgelöst. Nach Zugabe und Auflösung aller Komponenten wird der pH-Wert eingestellt. Die Einstellung des pH-Werts erfolgt mit 1%iger Natronlauge bzw. 50 %iger Schwefelsäure. Der pH-Wert soll zwischen 5,0 - 5,2 liegen, das Optimum ist bei 5,1.

Der Elektrolyt arbeitet bei einer Temperatur von 45 - 55 °C.

Die Abscheidung erfolgt bei mäßig starker Rührung (300 - 500 rpm).

Als Substrat wurde ein 1 mm starkes Blech aus Messing mit den Maßen 30mm x 30mm verwendet.

Zur Herstellung der Schicht wurde ein unipolarer Rechteckpuls verwendet, wobei die mittlere Stromdichte 1,6A/dm2 betrug. Die kathodischen Stromdichten lagen bei 1,5 und 2,5A/dm2 für 10ms, die anschließende Pulspause betrug 10ms.

Die Beschichtungsdauer betrug eine Stunde.

Die so hergestellten Schichten hatten folgende Zusammensetzung:
Nickel 90,5 Gew.-%, Molybdän 5,0 Gew.-% und Phosphor 4,5 Gew.-% - die Legierungselemente ergeben zusammen 100%.

Die Schichten sind gut haftend, rissfrei und glänzend.

Fig. 5 zeigt die Oberfläche der Schicht in REM-Aufnahme sowie das EDX-Spektrum.

## Patentansprüche

1. Beschichtung von Metallflächen von Funktionsteilen aus Metall, bevorzugt Backplatten, wobei auf die Metallfläche (6) zumindest eine Beschichtung (2) mit einer Legierung aufgetragen ist, **dadurch gekennzeichnet, dass** die Beschichtung eine Oberflächenschicht (3) umfasst, die aus einer Legierung besteht, die als Hauptbestandteil Nickel (Ni) und Phosphor (P), sowie weiters zumindest ein Metall aus der Gruppe Molybdän (Mo), und Zinn (Sn) enthält.

2. Beschichtung nach Anspruch 1, **dadurch gekennzeichnet, dass** in der Oberflächenschicht (3) P im Bereich 1 bis 15 Gew.-% und Mo bis zu 10 Gew.-% und/oder Sn bis 10 Gew.-% und der Rest auf 100 Gew.-% Nickel enthalten ist.

3. Beschichtung nach Anspruch 2, **dadurch gekennzeichnet, dass** die Legierung 0,05 bis 10,0 Gew.-% Sn, und/oder 0,01 bis 10,0 Gew.% Mo und 1 bis 15 Gew.-% Phosphor und Nickel auf 100 Gew.-% enthält und dass die Oberflächenschicht (3) eine durch galvanische Abscheidung aus einem galvanischen Bad gewonnene Legierungsschicht ist.

4. Beschichtung nach Anspruch 3, **dadurch gekennzeichnet, dass** die galvanische Abscheidung eine Pulsabscheidung oder bevorzugt eine Umkehrpulsabscheidung ist.

5. Beschichtung nach einem der Ansprüche 1 bis 4, **dadurch gekennzeichnet, dass** die Oberflächenschicht (3) eine Rauheit aufweist, deren Ra-Wert kleiner 5 µm, bevorzugt kleiner 3 µm und besonders bevorzugt kleiner 2 µm beträgt.

6. Beschichtung nach einem der Ansprüche 1 bis 5, **dadurch gekennzeichnet, dass** die Schichtdicke der Oberflächenschicht (3) zumindest 5 µm bevorzugt zwischen 10 µm und 50 µm beträgt.

7. Beschichtung nach einem der Ansprüche 1 bis 6, **dadurch gekennzeichnet, dass** zwischen Oberflächenschicht (3) und Metallfläche (6) eine oder mehrere Unterschichten (4, 5) angeordnet sind.

8. Beschichtung nach einem der Ansprüche 1 bis 7, **dadurch gekennzeichnet, dass** die Unterschichten elektrolytisch oder außenstromlos aufgebrachte Nickelschichten (4, 5) sind.

9. Beschichtung nach einem der Ansprüche 1 bis 8, **dadurch gekennzeichnet, dass** der Härtegradient der Unterschichten (4, 5) bis zur Oberflächenschicht (3) ansteigend ausgebildet ist.

10. Beschichtung nach einem der Ansprüche 1 bis 9, **dadurch gekennzeichnet, dass** die Unterschichten (4, 5) zweilagig sind und eine erste, der Metallfläche nächstliegende, Unterschicht (4) aus Halbglanznickelschicht oder Kupfer und eine zweite Unterschicht (5) aus Glanznickelschicht besteht.

11. Backplatte mit einer Beschichtung nach einem der Ansprüche 1 bis 10, wobei die beschichtete Metallfläche (6) die Backfläche einer Backplatte ist, insbesondere einer Backplatte zum industriellen Herstellen von knusprig-spröden Waffelblättern, Weichwaffeln und Hohlwaffeln sowie Backwaren aller Art, **dadurch gekennzeichnet, dass** die Backfläche mit einer die Backform bildenden Ausformung und Gravur ausgebildet ist.

12. Backplatte mit einer Beschichtung nach einem der Ansprüche 1 bis 11, **dadurch gekennzeichnet, dass** die beschichtete Backplatte bei Temperaturen zwischen 150 °C und 400 °C getempert ist.

13. Backplatte mit einer Beschichtung nach einem der Ansprüche 11 oder 12, dass der Backplattenkörper der Backplatte aus Gusseisen, Stahl oder Aluminium besteht.

14. Verfahren zur Beschichtung von Metallflächen, insbesondere von Backplatten aus Gusseisen, Stahl oder Aluminium, **dadurch gekennzeichnet, dass** die Metallfläche (6) zumindest abschnittsweise mit einer Oberflächenschicht (3) aus NiMoP- oder NiSnP- oder NiSnMoP-Legierung in einem galvanischen Verfahren, bevorzugt Pulsverfahren und besonders bevorzugt im Umkehrpulsverfahren aus einem galvanischen Bad beschichtet wird.

15. Verfahren nach Anspruch 14, **dadurch gekennzeichnet, dass** die Pulsabscheidung der Beschichtung aus einem Elektrolytbad mit folgenden Parameterbereichen durchgeführt wird:
eine unipolare Pulssequenz mit
Pulsstromdichte 0,5-15 A/dm²
Kathodische Pulszeit 5 - 100 ms
Off-Zeit 0,5 - 25 ms

16. Verfahren nach einem der Ansprüche 14 oder 15, **dadurch gekennzeichnet, dass** zur Herstellung der Schicht eine unipolare Pulssequenz mit Basisstrom und Pulspause wie folgt verwendet werden: Pulsstromdichte von 0,5 bis 15 A/dm², Basisstromdichte von 0,1 bis 8 A/dm², kathodische Pulszeit von 5 bis 100 ms, Pulspause von 0,5 bis 30 ms, mit einer Wiederholungsrate der kathodischen Sequenz von 1 bis 50 vor der Pulspause.

17. Verfahren nach einem der Ansprüche 14 bis 16, **dadurch gekennzeichnet, dass** zur Herstellung der Schicht ein bipolarer Puls mit Pulspause wie folgt verwendet werden: kathodische Pulsstromdichte von 0,5 bis 12 A/dm² mit einer Pulszeit von 5 bis 100 ms, anodische Pulsstromdichte von 0,5 bis 20 A/dm² mit einer Pulszeit von 5 bis 100 ms, Pulspause von 0,5 bis 30 ms, mit einer Wiederholungsrate der kathodischen Sequenz von 1 bis 50 vor dem Pulspause.

18. Verfahren nach einem der Ansprüche 14 bis 17, **dadurch gekennzeichnet, dass** zur Herstellung der Schicht ein bipolarer Puls mit Basisstrom wie folgt verwendet wird: kathodische Pulsstromdichte von 0,5 bis 20 A/dm² mit einer Pulszeit von 5 bis 100 ms, kathodische Basisstromdichte von 0,5 bis 12 A/dm² mit einer Pulszeit von 5 bis 100 ms, anodische Pulsstromdichte von 0,5 bis 20 A/dm²mit einer Pulszeit von 5 bis 100 ms, mit einer Wiederholungsrate der kathodischen Sequenz von 1 bis 50 vor dem anodischen Pulsstrom.

19. Verfahren nach einem der Ansprüche 14 bis 18, **dadurch gekennzeichnet, dass** das Elektrolytbad Salze und Säuren enthält, die aus folgender Gruppe ausgewählt sind:
a) Nickelsulfat Hexahydrat im Bereich von 250 - 700 g/l
b) Nickelchlorid Hexahydrat im Bereich von 5 - 50 g/l
c) Zinn-(IV)-chlorid Hydrat im Bereich von 1 - 40 g/l
d) Zinn-(II)-sulfat im Bereich von 1 - 30 g/l
e) Zinn-(II)-chlorid Dihydrat im Bereich von 1 - 40 g/l
f) Natriummolybdat-Dihydrat im Bereich von 1 - 30 g/l
g) Molybdatophosphorsäure im Bereich von 1 - 30 g/l
h) Natriumcitrat im Bereich von 1 - 90 g/l
i) Borsäure im Bereich von 25 - 45 g/l
j) Phosphorige Säure im Bereich von 1 - 25 g/l
k) Phosphorsäure im Bereich von 1 - 5 g/l
l) Natrium-Hypophosphit im Bereich von 5 - 40 g/l
m)Natrium-Gluconat im Bereich von 40 - 90 g/l
n) Kalium-Natrium-Tartrat im Bereich von 10 - 50 g/l

20. Verfahren nach Anspruch 19, **dadurch gekennzeichnet, dass** das Elektrolytbad folgende Bestandteile enthält:
a) Nickelsulfat Hexahydrat im Bereich von 250 - 700 g/l
b) Nickelchlorid Hexahydrat im Bereich von 5 - 50 g/l
c) Zinn-(IV)-chlorid Hydrat im Bereich von 1 - 40 g/l
i) Borsäure im Bereich von 25 - 45 g/l
j) Phosphorige Säure im Bereich von 1 - 25 g/l
k) Phosphorsäure im Bereich von 1 - 5 g/l

21. Verfahren nach Anspruch 19, **dadurch gekennzeichnet, dass** das Elektrolytbad folgende Bestandteile enthält:
a) Nickelsulfat Hexahydrat im Bereich von 250 - 700 g/l
b) Nickelchlorid Hexahydrat im Bereich von 5 - 50 g/l
g) Molybdatophosphorsäure im Bereich von 1 - 30 g/l
h) Natriumcitrat im Bereich von 1 - 90 g/l
i) Borsäure im Bereich von 25 - 45 g/l
j) Phosphorige Säure im Bereich von 1 - 25 g/l
k) Phosphorsäure im Bereich von 1 - 5 g/l

22. Verfahren nach Anspruch 19, **dadurch gekennzeichnet, dass** das Elektrolytbad folgende Bestandteile enthält:
a) Nickelsulfat Hexahydrat im Bereich von 250 - 700 g/l
b) Nickelchlorid Hexahydrat im Bereich von 5 - 50 g/l
f) Natriummolybdat-Dihydrat im Bereich von 1 - 30 g/l
h) Natriumcitrat im Bereich von 1 - 90 g/l
i) Borsäure im Bereich von 25 - 45 g/l l) Natrium-Hypophosphit im Bereich von 5 - 40 g/l

23. Verfahren nach Anspruch 20, **dadurch gekennzeichnet, dass** das Elektrolytbad zusätzlich folgende Bestandteile enthält:
g) Molybdatophosphorsäure im Bereich von 1 - 30 g/l
h) Natriumcitrat im Bereich von 1 - 90 g/l

24. Verfahren nach Anspruch 19, **dadurch gekennzeichnet, dass** das Elektrolytbad folgende Bestandteile enthält:
a) Nickelsulfat Hexahydrat im Bereich von 250 - 700 g/l
b) Nickelchlorid Hexahydrat im Bereich von 5 - 50 g/l
d) Zinn-(II)-sulfat im Bereich von 1 - 30 g/l
e) Zinn-(II)-chlorid Dihydrat im Bereich von 1 - 40 g/l
f) Natriummolybdat-Dihydrat im Bereich von 1 - 30 g/l
i) Borsäure im Bereich von 25 - 45 g/l
j) Phosphorige Säure im Bereich von 1 - 25 g/l
m)Natrium-Gluconat im Bereich von 40 - 90 g/l
n) Kalium-Natrium-Tartrat im Bereich von 10 - 50 g/l

25. Verfahren nach Anspruch 19, **dadurch gekennzeichnet, dass** das Elektrolytbad folgende Bestandteile enthält:
a) Nickelsulfat Hexahydrat im Bereich von 250 - 700 g/l
b) Nickelchlorid Hexahydrat im Bereich von 5 - 50 g/l
d) Zinn-(II)-sulfat im Bereich von 1 - 30 g/l
e) Zinn-(II)-chlorid Dihydrat im Bereich von 1 - 40 g/l
f) Natriummolybdat-Dihydrat im Bereich von 1 - 30 g/l
i) Borsäure im Bereich von 25 - 45 g/l
j) Phosphorige Säure im Bereich von 1 - 25 g/l
m)Natrium-Gluconat im Bereich von 40 - 90 g/l
n) Kalium-Natrium-Tartrat im Bereich von 10 - 50 g/l

26. Verfahren nach einem der Ansprüche 14 bis 25, **dadurch gekennzeichnet, dass** der pH-Wert 1,0 bis 5,5 und die Badetemperatur 25 °C bis 75 °C betragen.
